# EUROPEAN PATENT SPECIFICATION

(11) **EP 2 650 219 B1**
(45) Date of publication and mention of the grant of the patent: **29.11.2017**
(21) Application number: 13163230.9
(22) Date of filing: 10.04.2013
(51) Int. Cl.: B64D 15/12

(54) **Deicer zones with heating-enhanced borders**
Enteiserzonen mit heizungsverstärkten Rändern
Zones de dégivrage avec bords à chauffage accru

(30) Priority: 11.04.2012 US 201261623047 P; 11.04.2012 US 201261623050 P
(43) Date of publication of application: 16.10.2013
(73) Proprietor: Goodrich Corporation, Charlotte, NC 28217-4578 (US)
(72) Inventor: Botura, Galdemir, San Diego, CA 92154 (US); Burkett, Brian, Akron, OH 44333 (US); Mitrovic, Milan, Del Mar, CA 92014 (US)
(74) Representative: Leckey, David Herbert

(56) References cited:
- EP-A1- 0 680 878
- US-A- 3 013 752
- US-B1- 6 237 874

## Description

### BACKGROUND

An aircraft will typically include an ice protection system to prevent excessive ice accumulation on its wings, stabilizers, engine inlet lips, and/or pylons. The ice protection system can incorporate an array of contiguous deicing zones associated with areas surrounding the leading edge. Each deicing zone can include an envelope having an electrothermal layer which converts electric power to heat for deicing of the associated area.

An ice protection system with the features of the preamble of claim 1 is disclosed in US 6 237 874 B1.

### SUMMARY

The present invention provides an ice protection system in accordance with claim 1.

### DRAWINGS

Figure 1 shows an aircraft having several surfaces protectable by the ice protection system.
Figures 2-3 shows flattened views of the ice protection system wherein interzone borders extend in a spanwise direction.
Figures 4-6 show standard power-supply procedures for the deicing zones of the ice protection system.
Figures 7A-7C show some possible edge-power-density profiles for the deicing zones of the ice protection system.

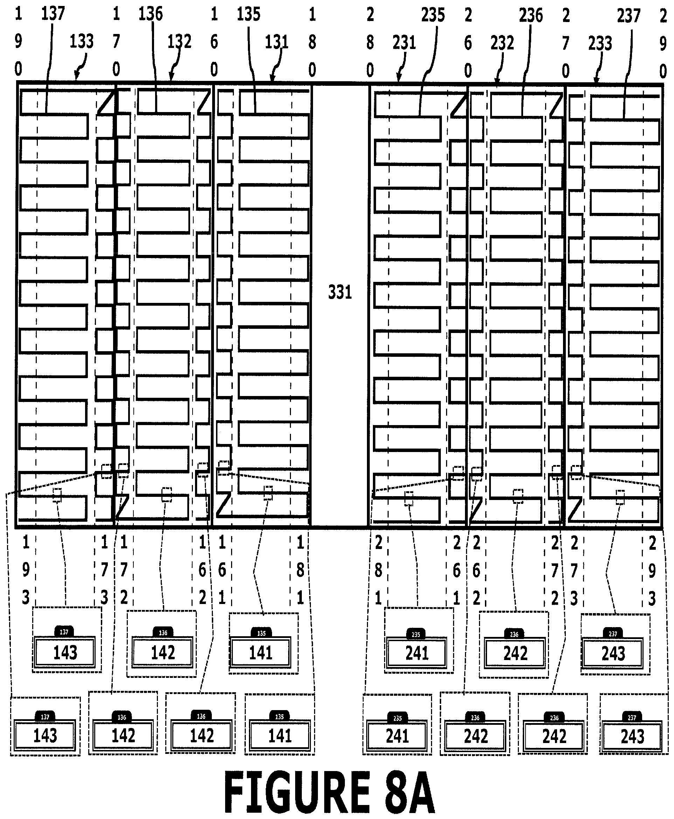

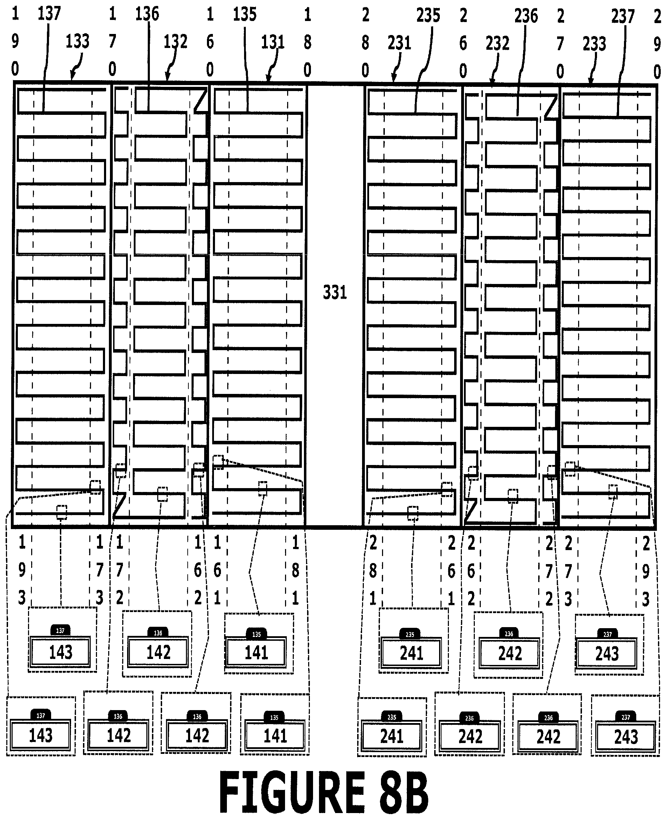

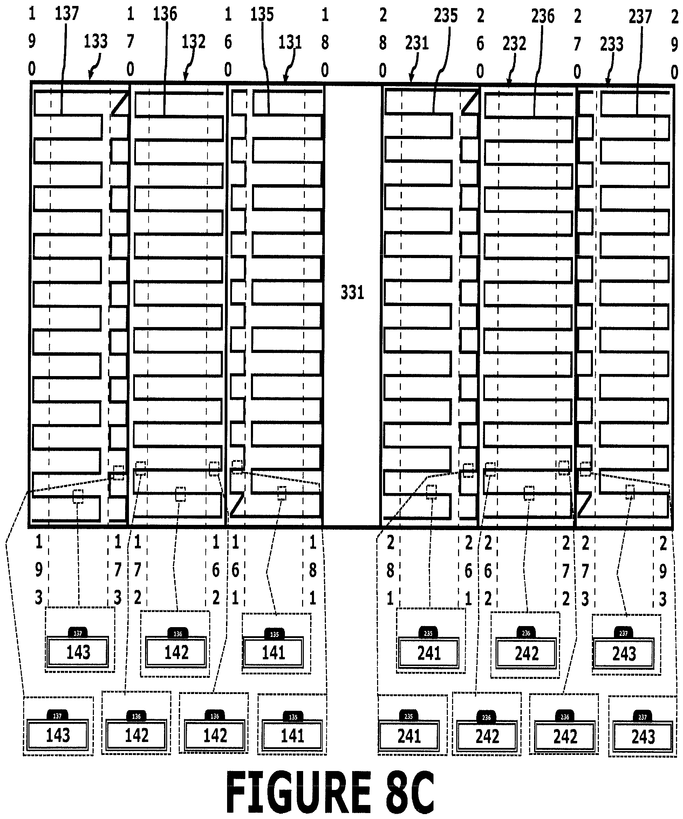

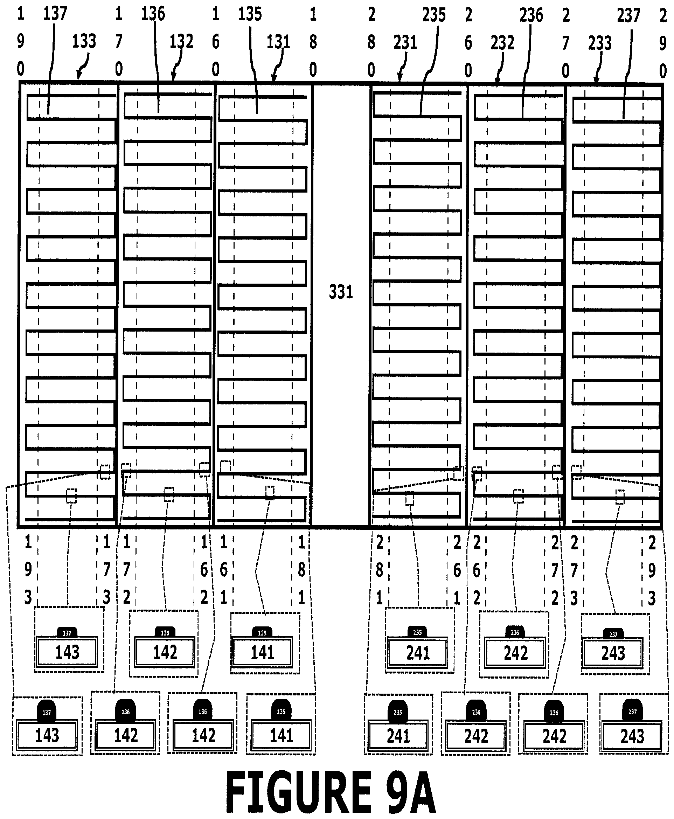

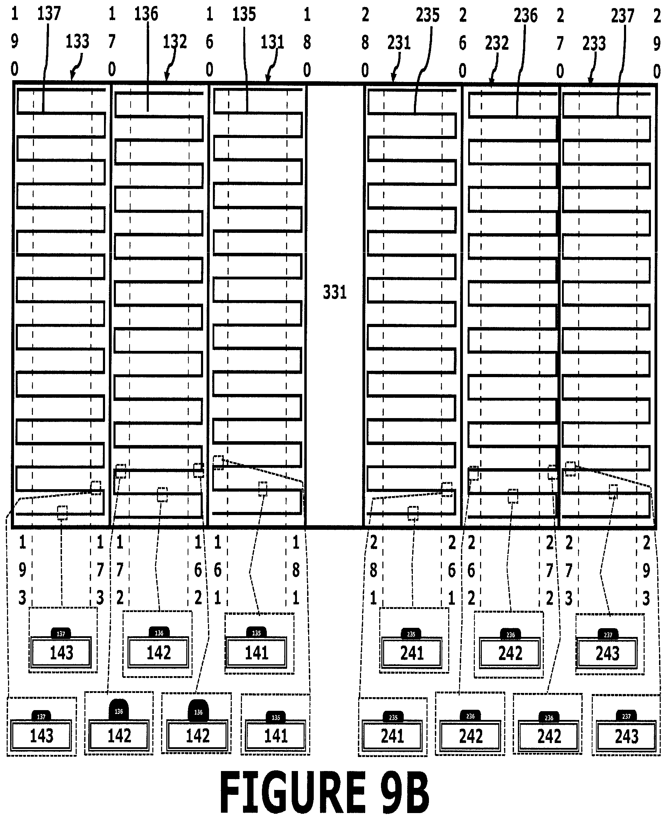

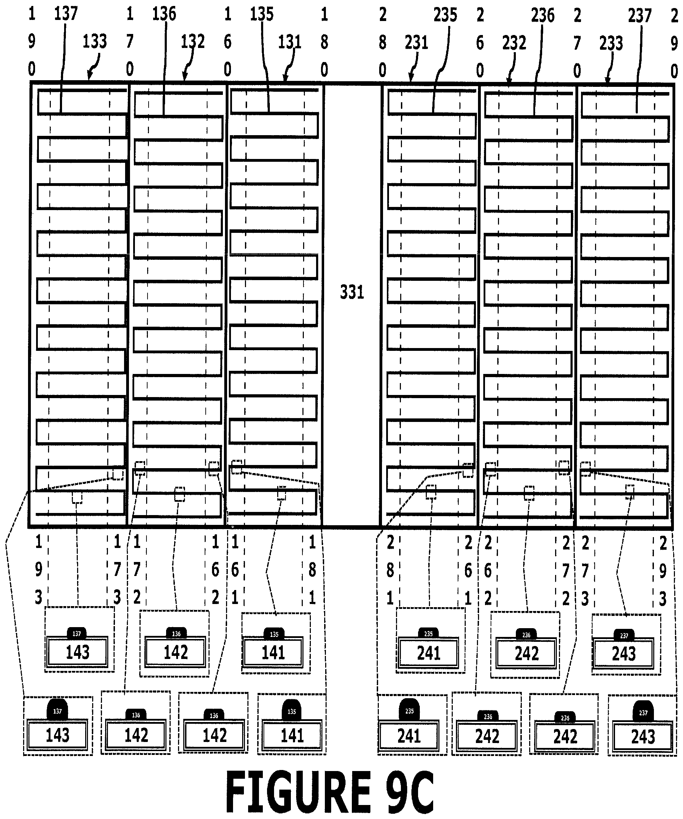

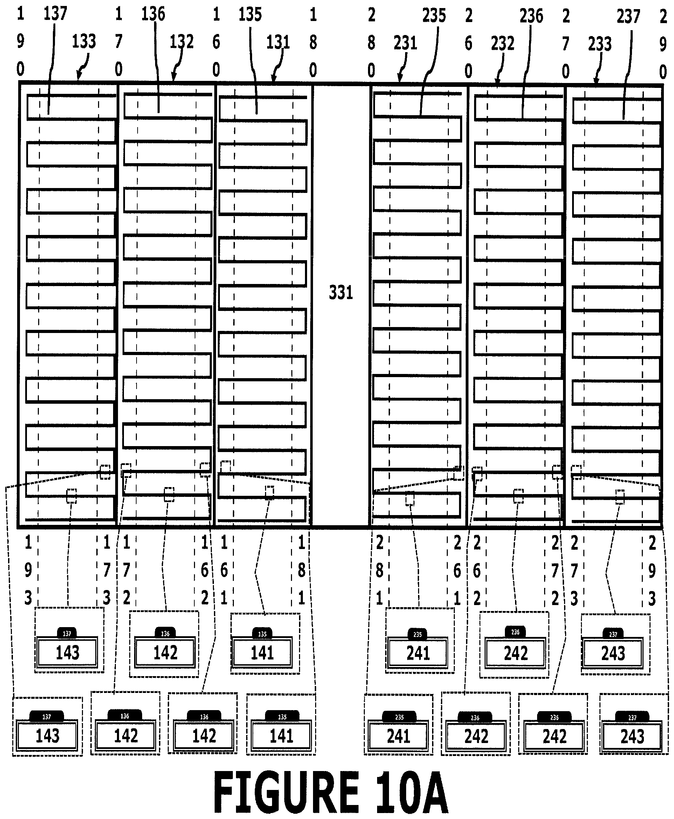

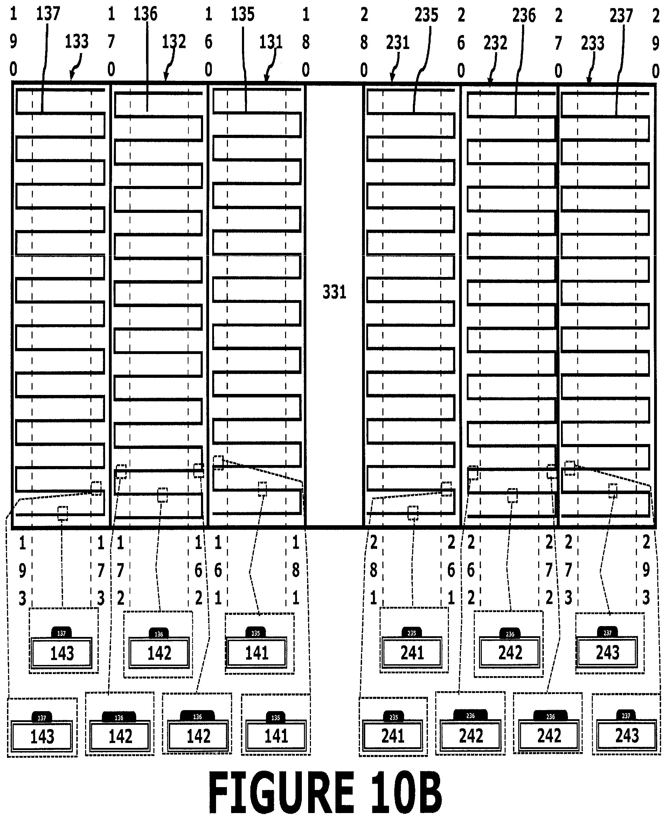

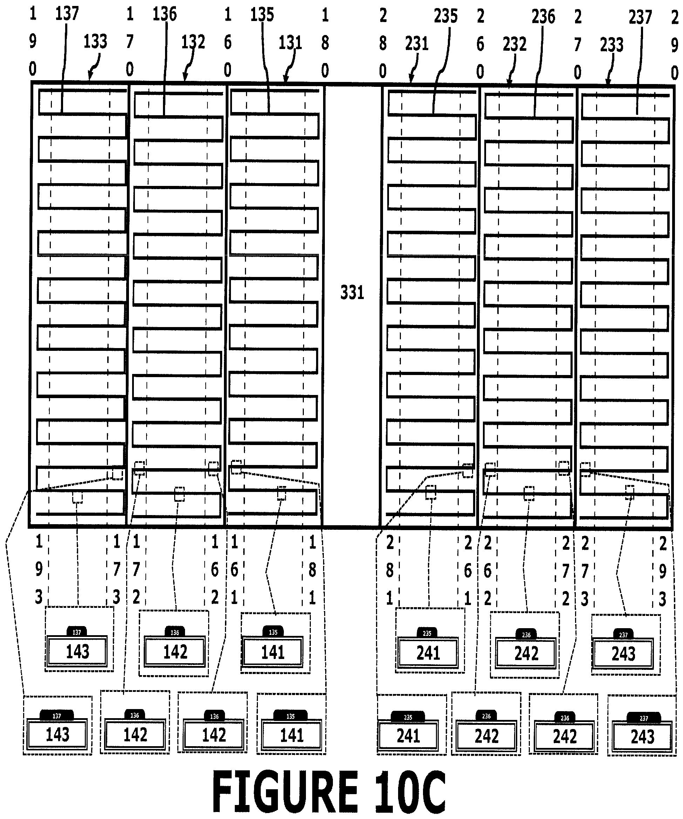

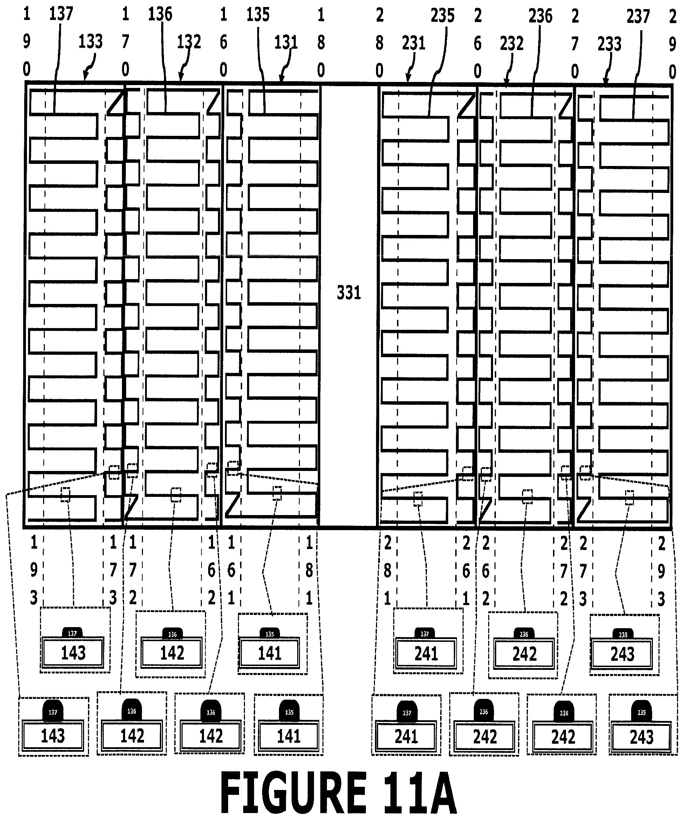

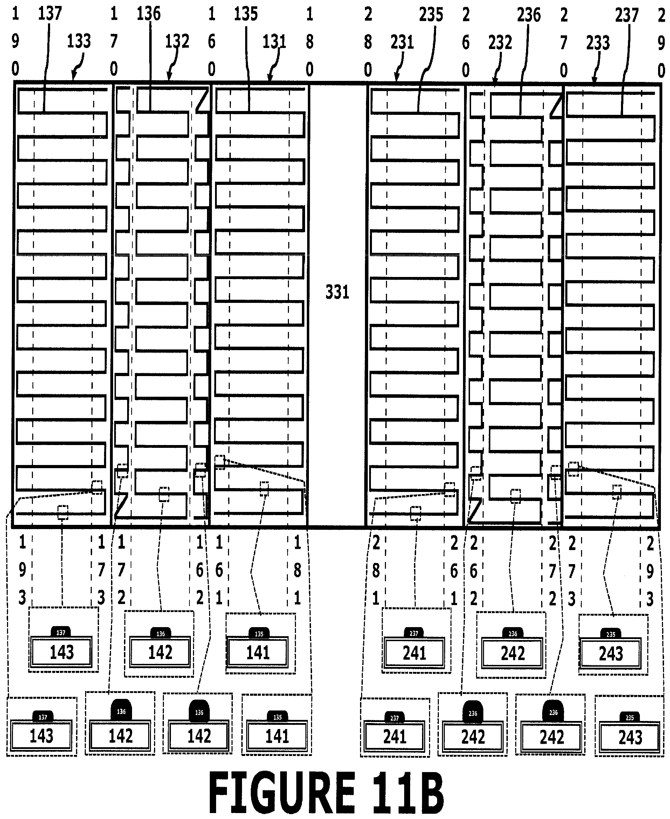

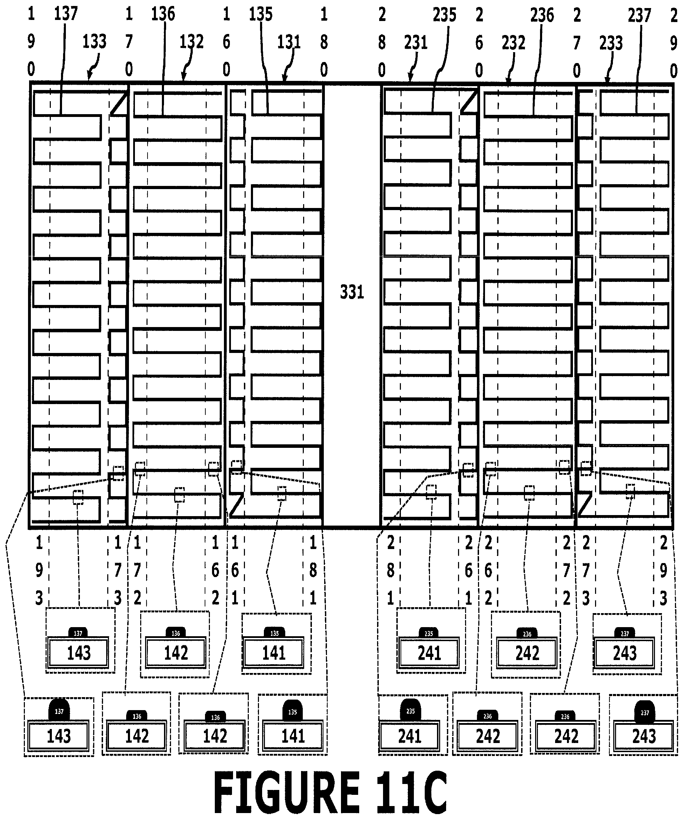

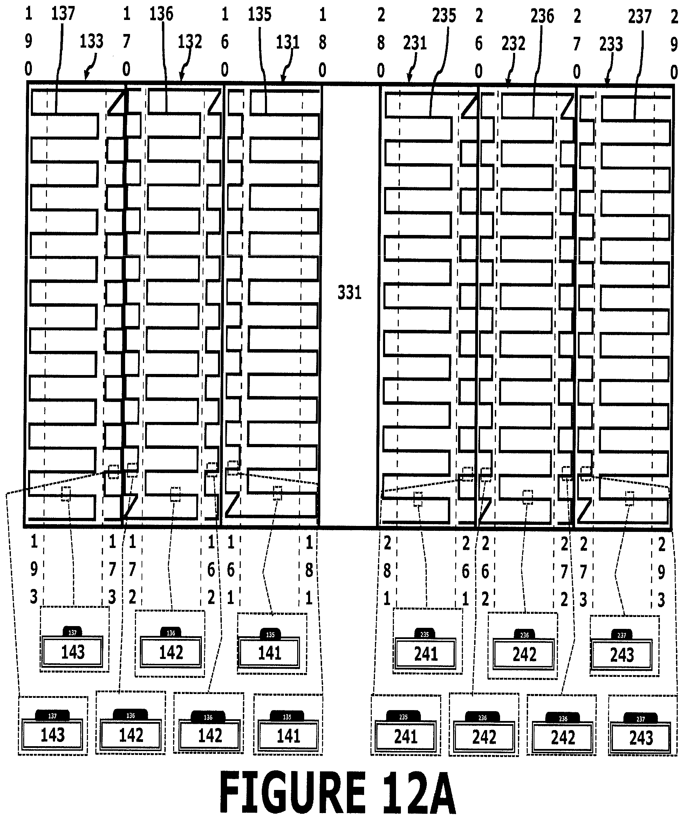

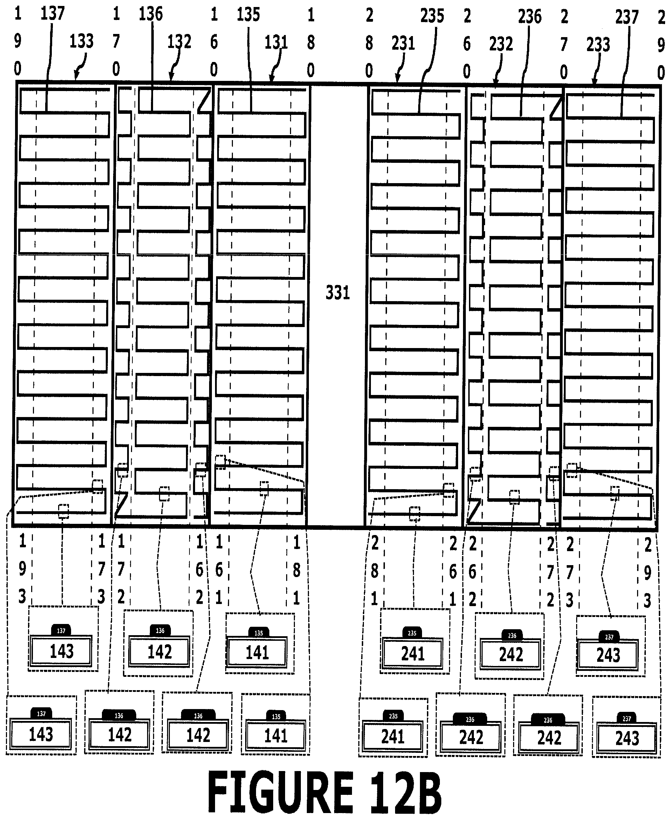

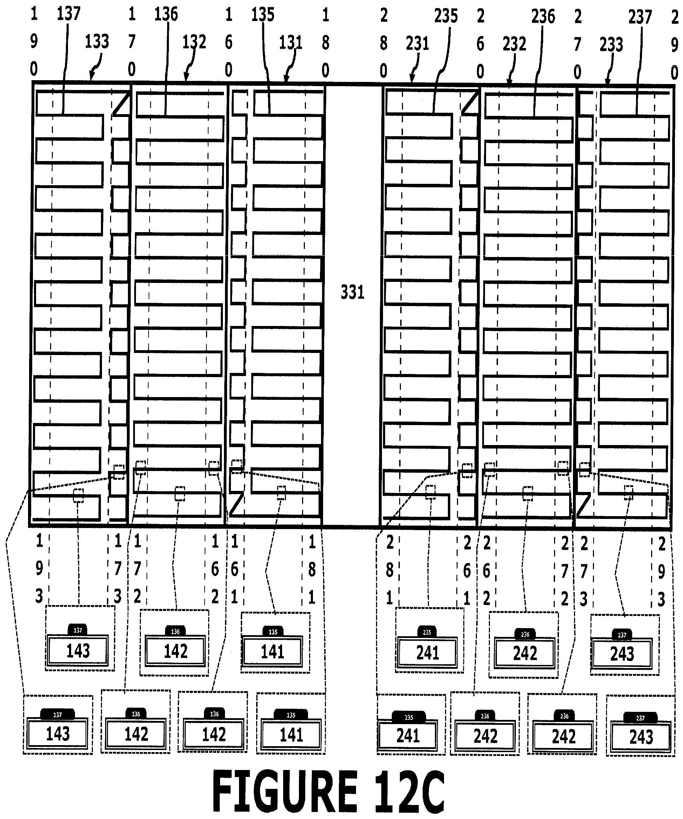

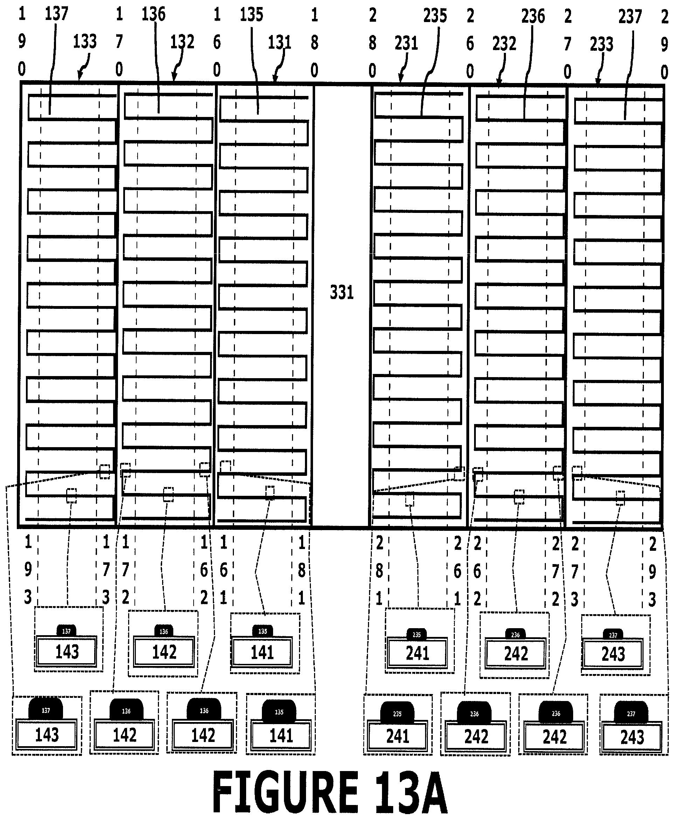

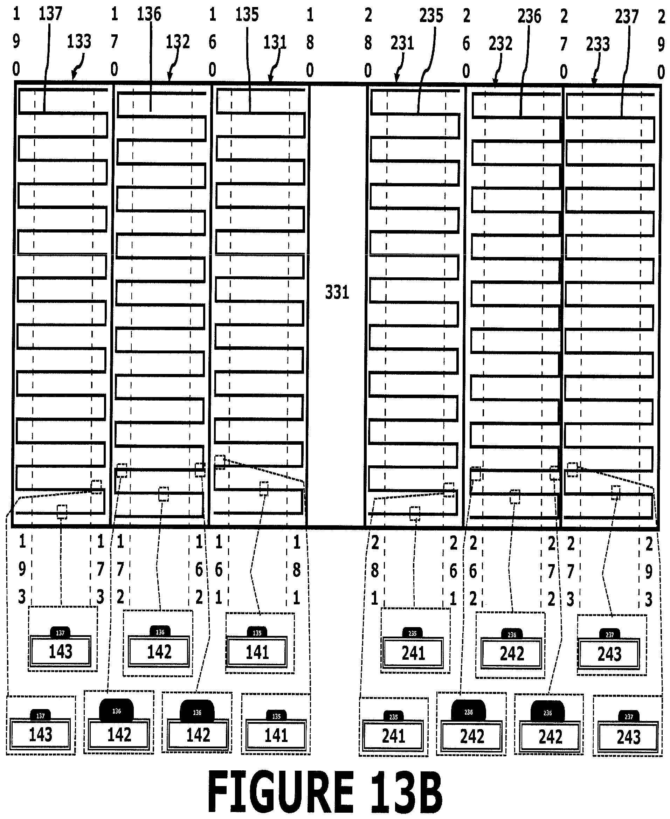

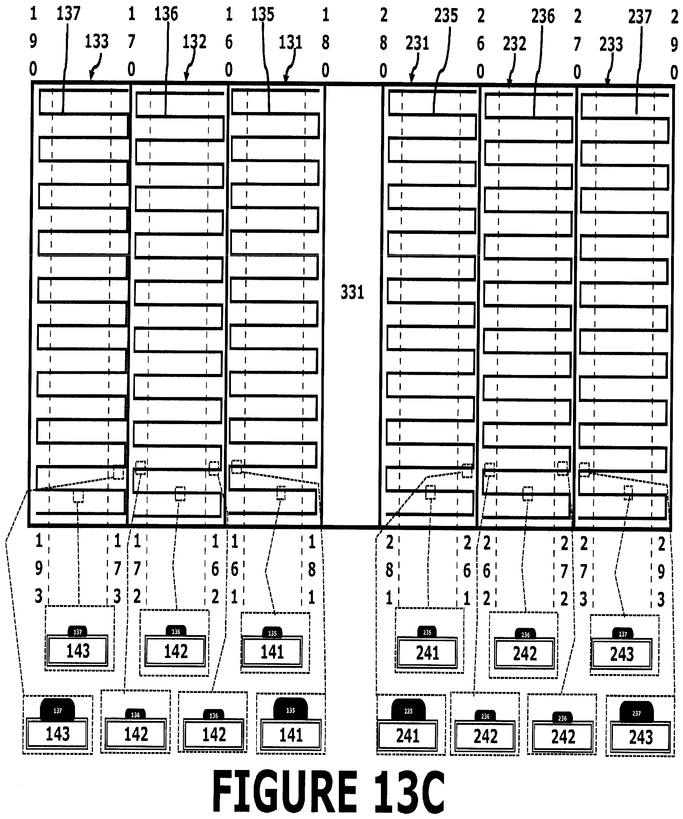

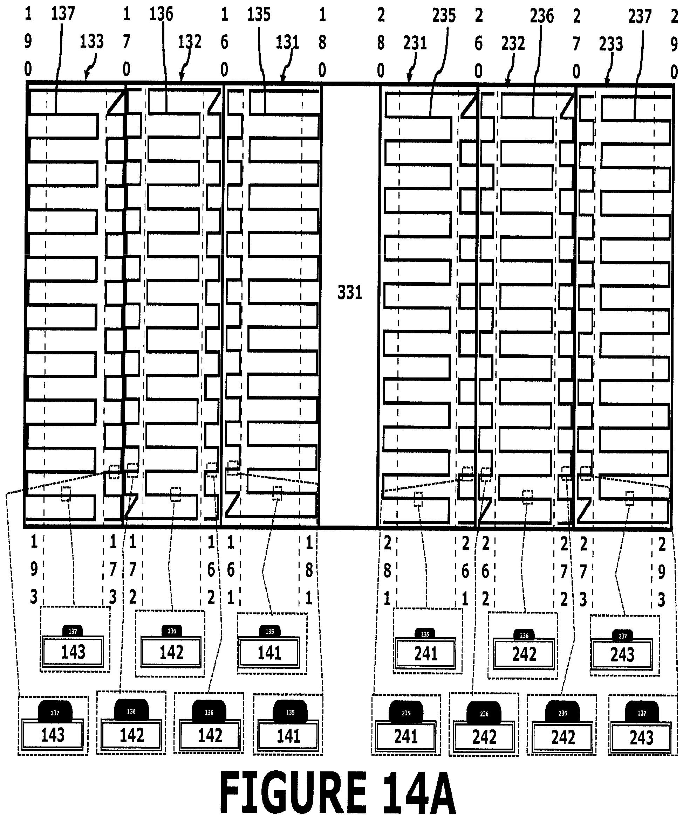

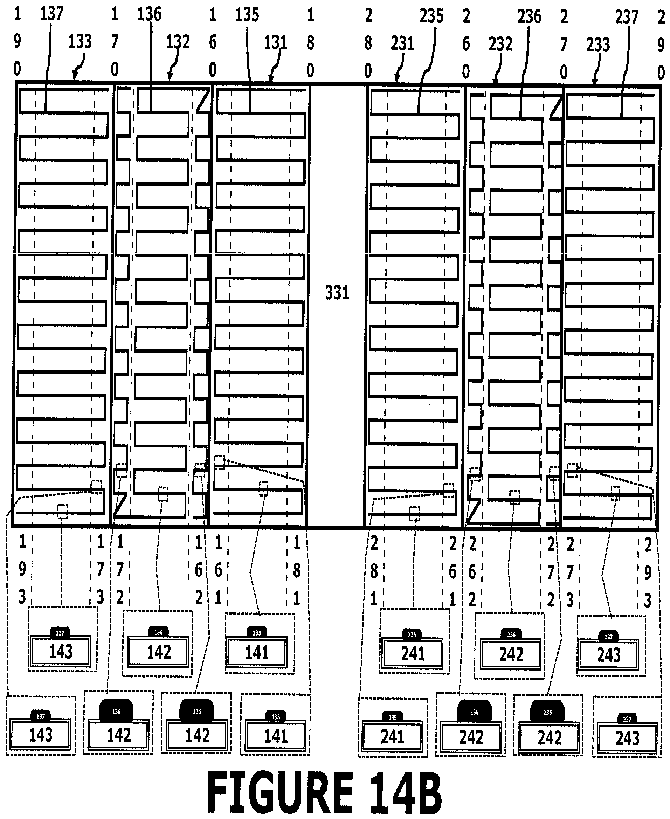

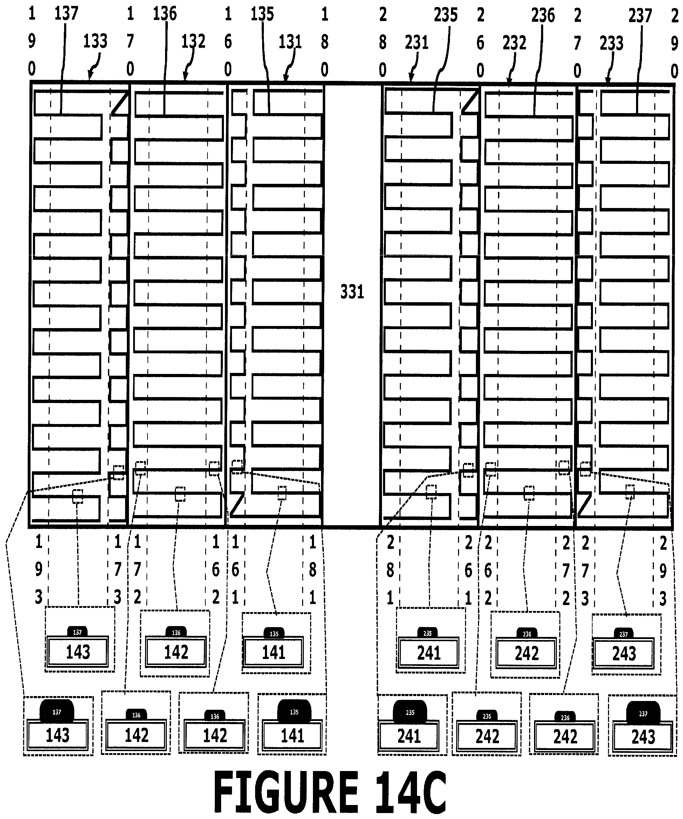

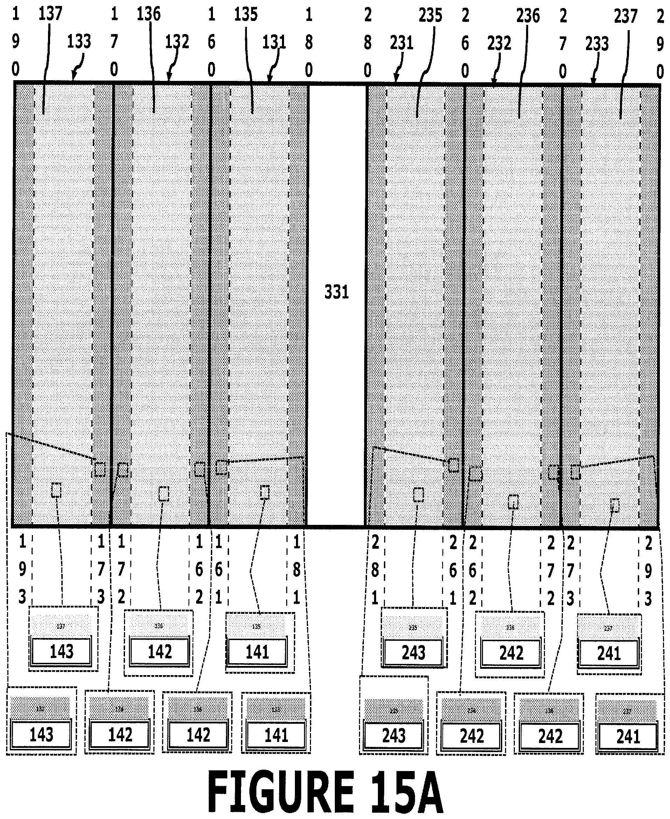

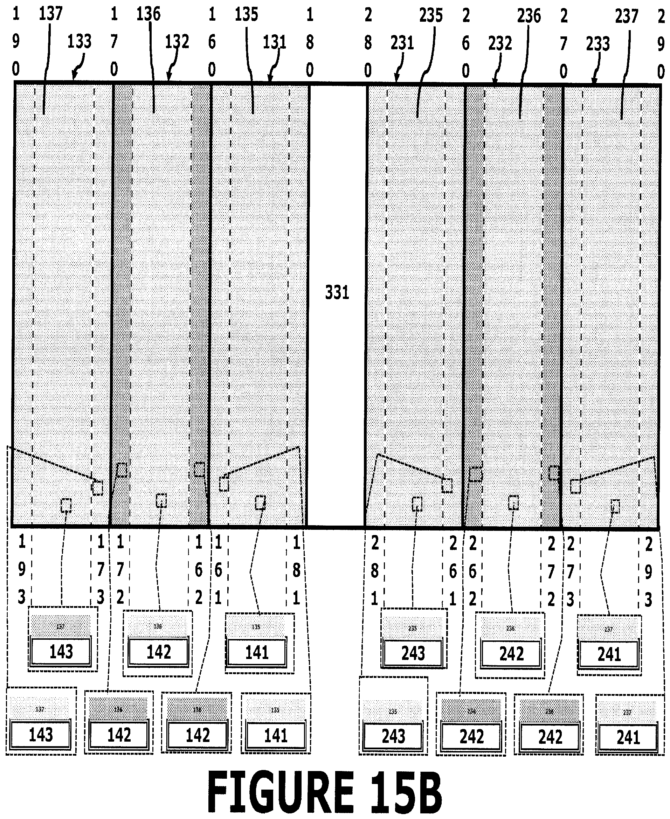

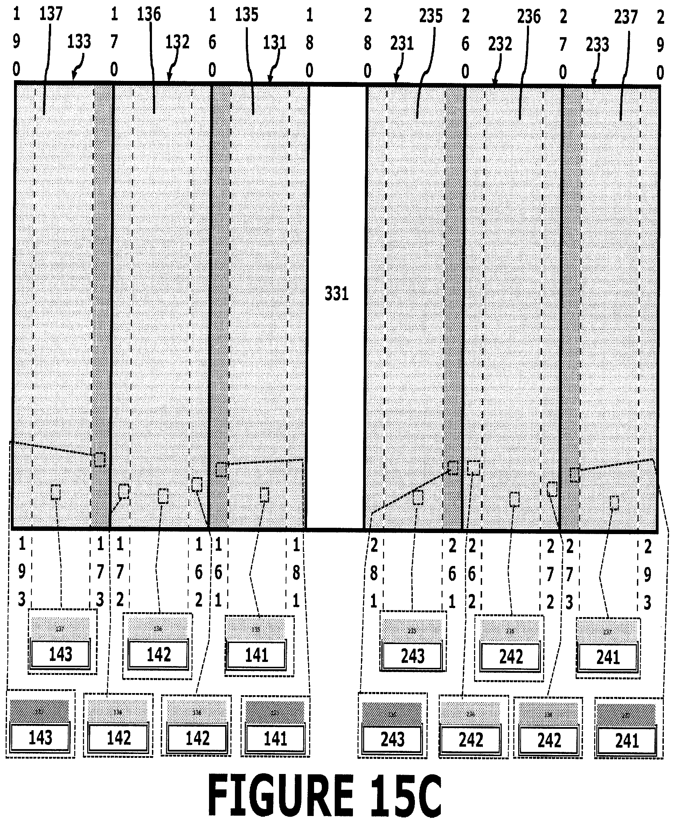

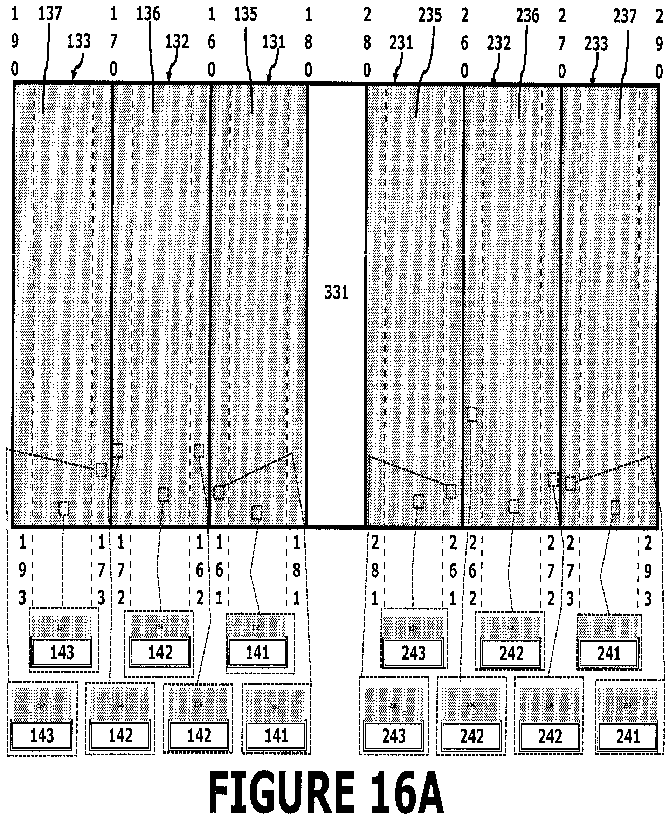

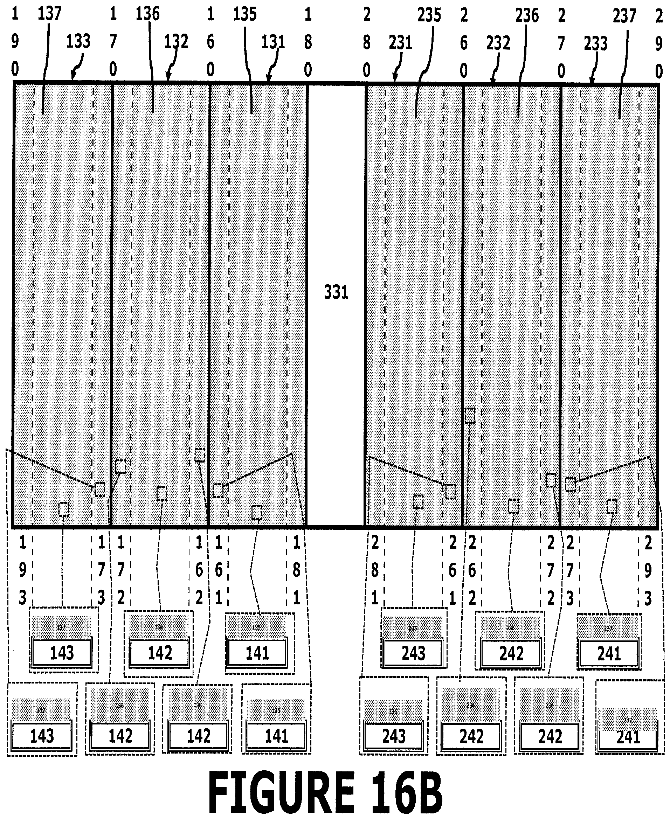

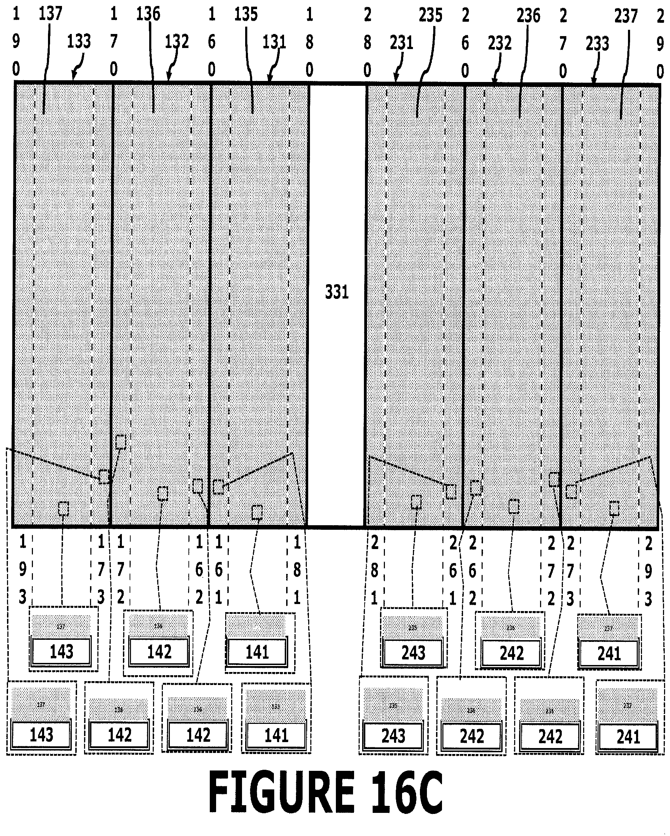

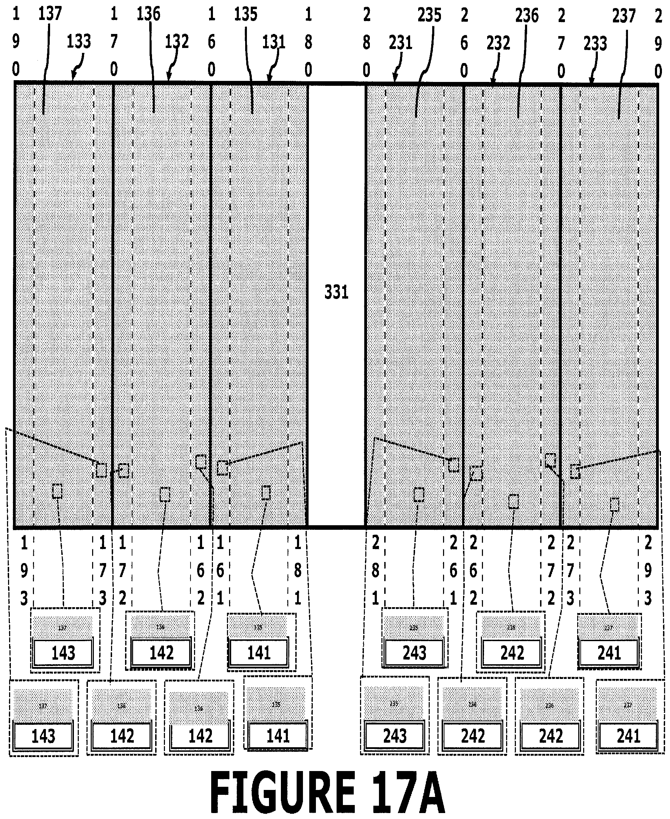

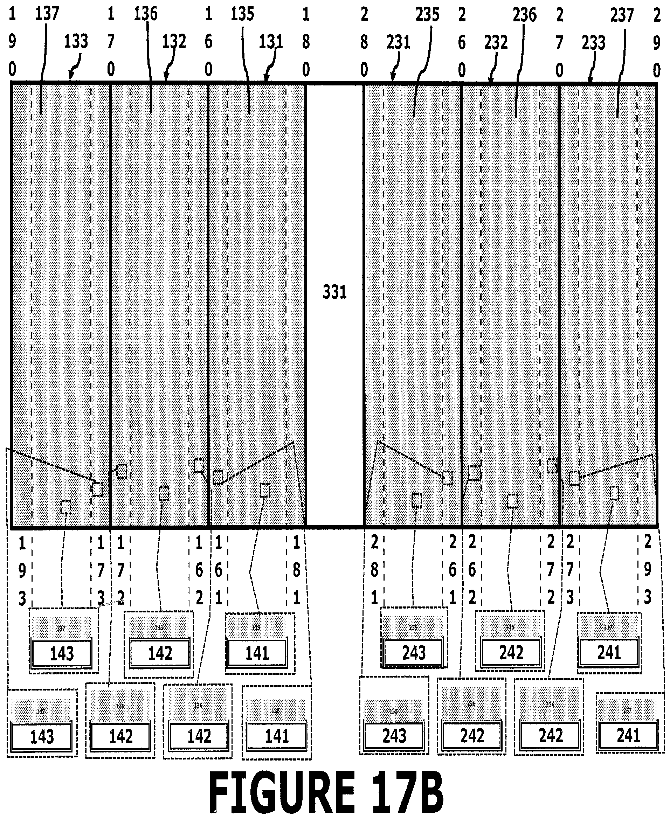

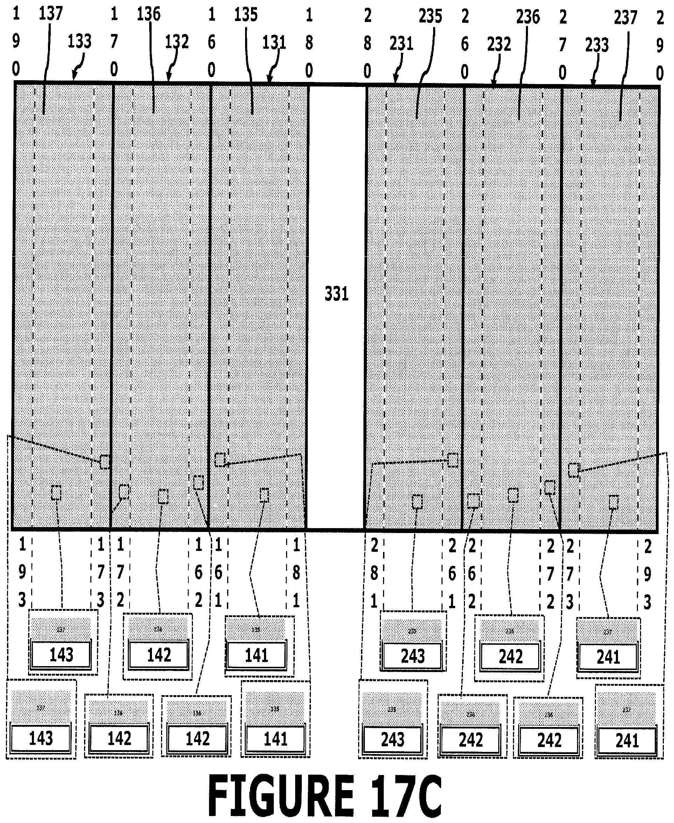

Figures 8A-8C, 9A-9C, 10A-10C, 11A-11C, 12A-12C, 13A-13C, 14A-14C, 15A-15C, 16A-16C, and 17A-17C show some heater-element constructions for achieving the edge-power-density profiles shown in Figures 7A-7C.
Figure 18 plots the increase in per-episode power versus the decrease in overall deicing power.
Figure 19 shows an alternate version of the ice protection system wherein the interzone borders instead extend in a chordwise direction.

### DESCRIPTION

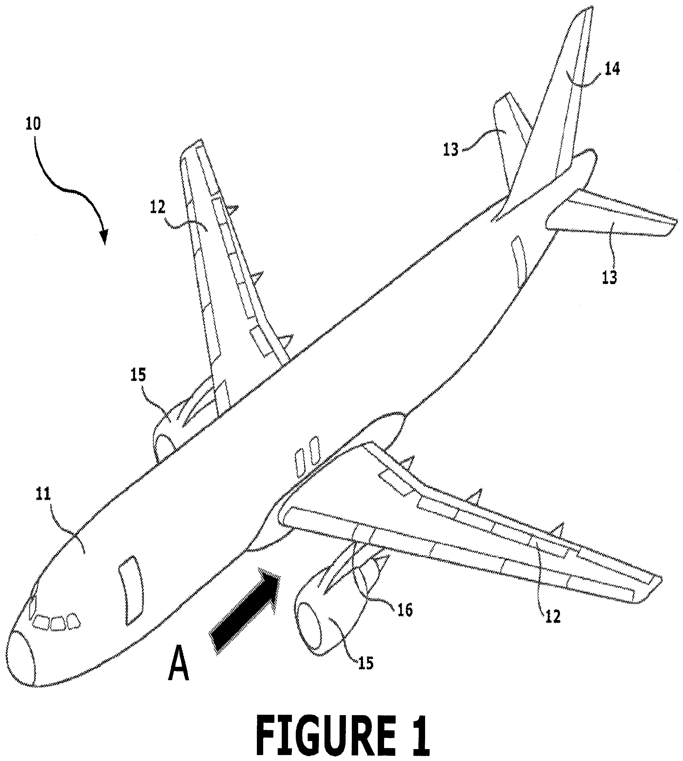

Referring to Figure 1, an aircraft 10 can comprise fuselage 11, wings 12, horizontal stabilizers 13, a vertical stabilizer 14, engines 15, and pylons 16. The wings 12 are the aircraft's primary lift providers. The horizontal stabilizers 13 prevent up-down motion of the aircraft nose, and the vertical stabilizer 14 discourages side to side swinging. The engines 15 are the aircraft's thrust-providing means and the pylons 16 serve as underwing mounting means for the engines.

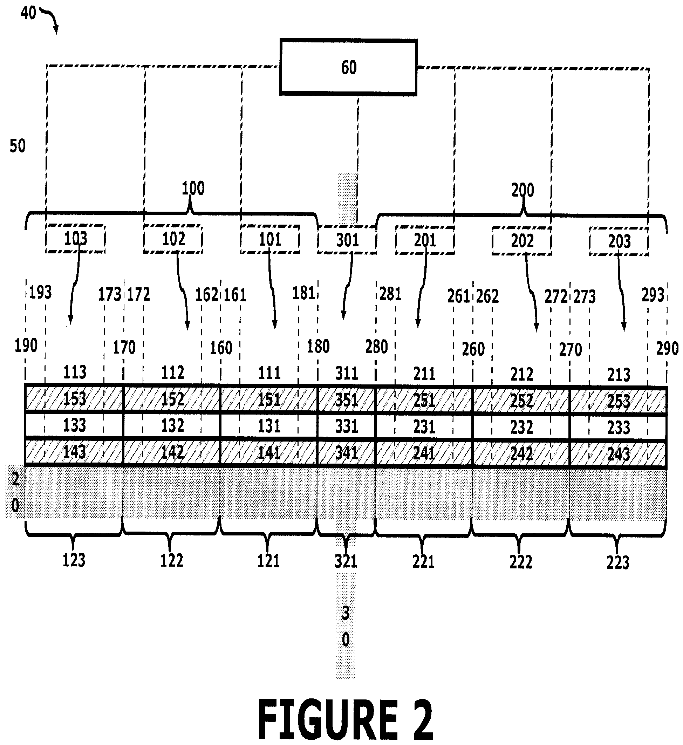

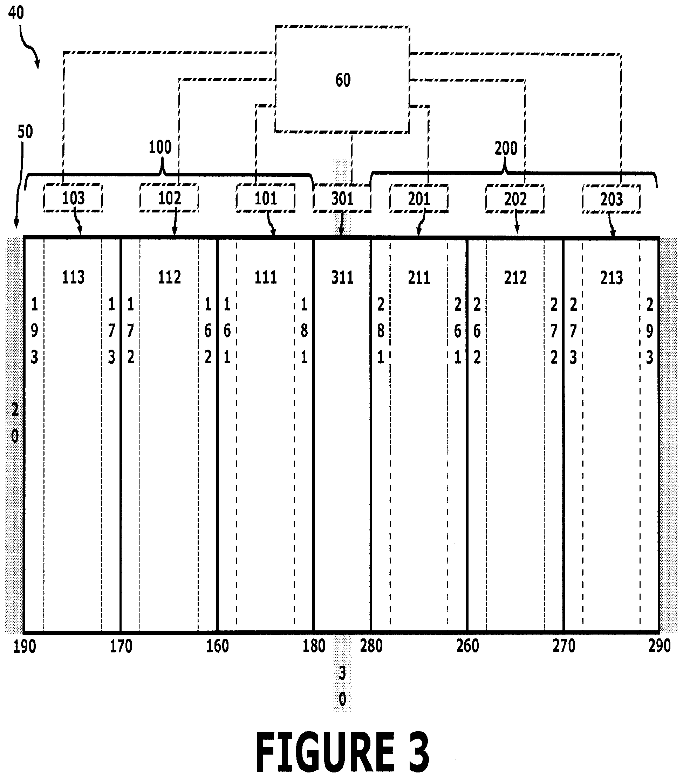

Referring to Figures 2-3, each wing 12, stabilizer 13-14, engine 15, and/or pylon 16 can be viewed as having an ice-susceptible surface 20 with a leading edge 30. The airstream A first encounters the leading edge 30 and then travels in a fore-aft direction therefrom.

The surface 20 is provided with an ice protection system 40 comprising an ice protection array 50 and a controller 60 operably connected to the array 50. The illustrated ice protection array 50 comprises a first set 100 of contiguous deicing zones 101-103, a second set 200 of contiguous deicing zones 201-203, and an anti-icing zone 301. The anti-icing zone 301 will usually coincide with the leading edge 30 and can be positioned between the fore zone 101 of the first deicer set 100 and the fore zone 201 of the second deicer set 200.

While the surface 20 appears flat in the drawing, this is simply for ease in illustration and explanation. In most instances, the surface 20 will have a curved profile wrapping around the leading edge 30 of the associated aircraft structure. If, for example, the ice-susceptible surface 20 is on a wing 12 or a horizontal stabilizer 13, the deicing zones 101-103 could be located on upper portion of the wing/stabilizer and the deicing zones 201-203 could be located on its lower portion. If the surface 20 resides on the vertical stabilizer 14 or one of the pylons 16, the deicing zones 101-103 could occupy its rightside portions and the deicing zones 201-203 could occupy its leftside portions. If the surface area 20 is on one of the engines 15, the deicing zones 101-103 could be situated on inner lip portions and the deicing zones 201-203 could be situated on outer lip portions.

The deicing zones 101-103 in the first deicer set 100 each comprise an envelope 111-113 defining an ice protection area 121-123. Each envelope 111-113 includes an electrothermal heater layer 131-133 which converts electric power to heat to deice the corresponding ice-protection area 121-123. The envelopes 111-113 can comprise further layers (e.g., layers 141-143, layers 151-153, etc.) surrounding the heater layers 131-133 for thermal transfer, electrical insulation, and/or protection purposes.

The envelopes 111-112 share a common interzone border 160 and the envelopes 112-113 share a common interzone border 170, which both extend generally in a spanwise direction perpendicular to the airstream direction A. The interzone border 160 is flanked by an end region 161 of the envelope 111 and an end region 162 of the envelope 112. The interzone border 170 is flanked by an end region 172 of the envelope 112 and an end region 173 of the envelope 113.

The envelope 111 has a non-common (e.g., fore) border 180 adjacent its edge region 181 and the envelope 113 has a non-common (e.g., aft) border 190 adjacent its edge region 193. The border 180 and the border 190 also extend generally in a spanwise direction perpendicular to the airstream direction A.

The deicing zones 201-203 in the second deicer set 200 include similar envelopes 211-213 defining ice protection areas 221-223 and including envelope layers (e.g., layers 231-233, layers 241-243, layers 251-253, etc.). They also include an interzone border 260 (flanked by envelope edge regions 261 and 262), an interzone border 270 (flanked by envelope edge regions 272 and 273), a fore border 280 (adjacent envelope edge region 281), and an aft border 290 (adjacent envelope edge region 293). The interzone border 260, the interzone border 270, the fore border 280, and the aft border 290 extend generally in a direction perpendicular to the airstream direction A.

The anti-icing zone 301 can include an envelope 311 defining an ice protection area 321, housing an electrothermal heater layer 331, and including additional envelope layers 341 and 351. The anti-icing zone 301 can be bounded by borders 180 and 280 and flanked by envelope edge regions 181 and 281.

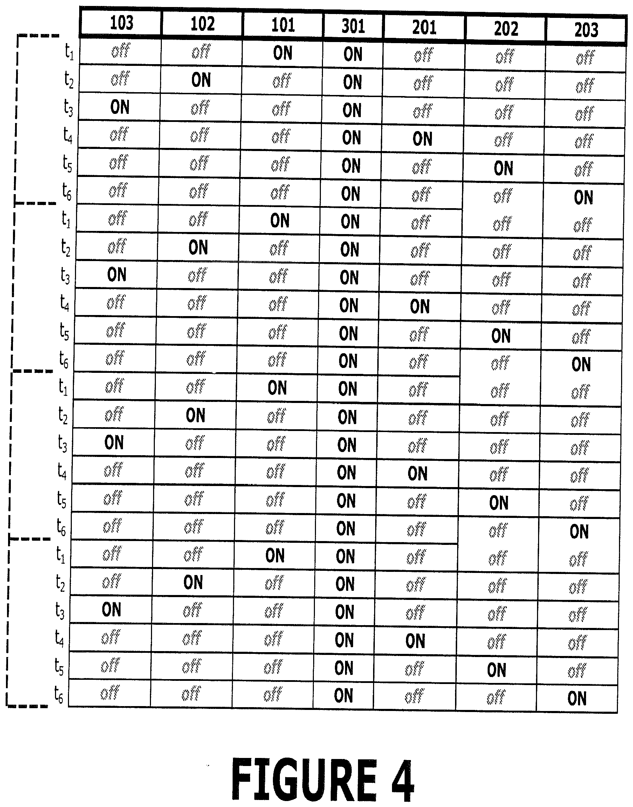

Referring to Figures 4-6, some possible power-supply procedures for the ice protection system 40 are shown. In each of these procedures, electrical power is episodically (not constantly) supplied to a heater for short time periods. The episode extent is selected so that enough heat is provided to loosen accumulated ice for sweeping away by the ensuing airstream. The episode-to-episode interlude is chosen so that an appropriate amount of ice accumulates therebetween. Although these time durations will vary depending upon several factors, an episode will ordinarily last about five to ten seconds and will usually be less than twenty seconds. And the interlude between episodes is generally greater than ten seconds.

In a zoned electrothermal deicing procedure, the power-supply episodes are executed in a staggering schedule so as to minimize power-draw spikes. The heaters' episodes are collectively viewed in terms of time intervals t1-tn, with different heaters being supplied power during different intervals. A cycle is completed when a power-supply episode has occurred for each deicing zone.

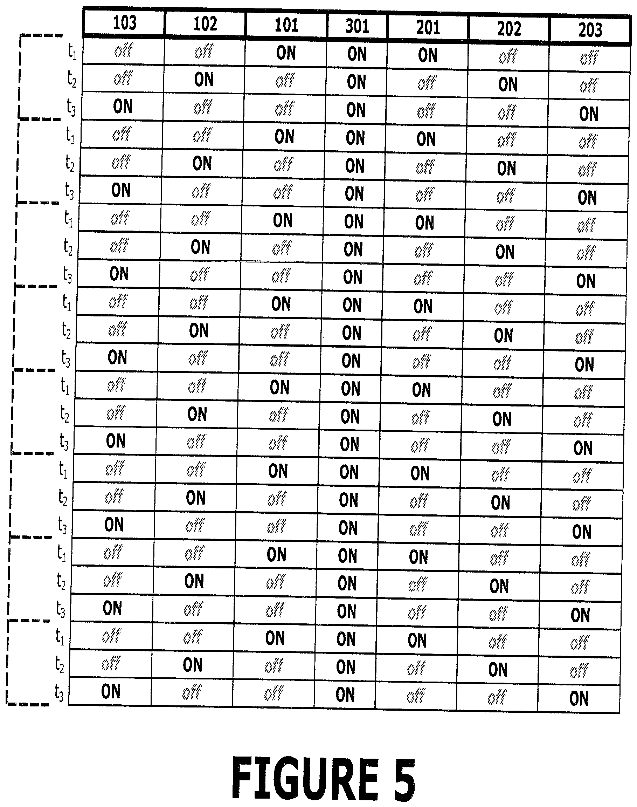

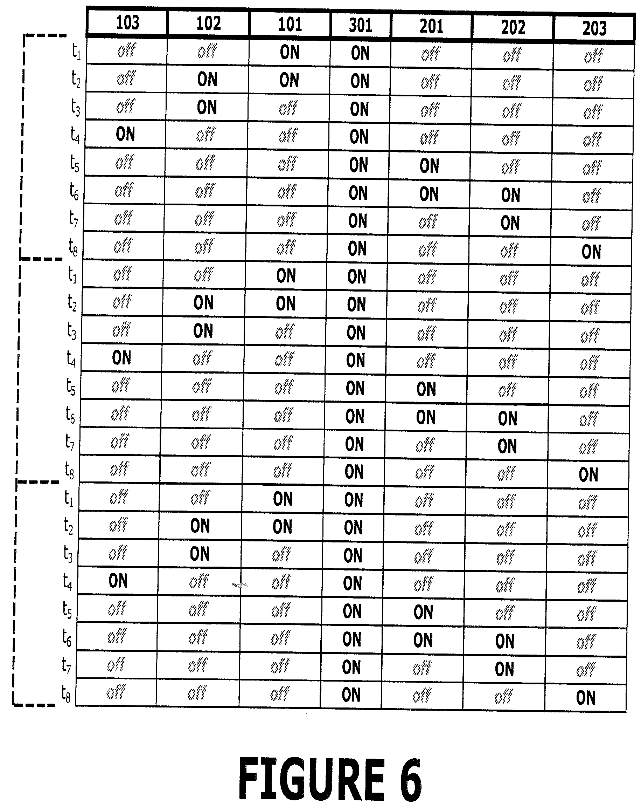

In Figure 4, each cycle includes six intervals t1-t6, with power being supplied to sequentially to zones 101-103 and then sequentially to zones 201-203. In Figure 5, each cycle includes three intervals t1-t3, with power being supplied sequentially to zones 101-103 and sequentially to zones 201-203 at the same time. In Figure 6, each cycle includes eight intervals t1-t8, with only one deicing zone being supplied power during some of the intervals (e.g., intervals t1, t4, t5, t8) and two deicing zones being supplied with power during other intervals (e.g., intervals t2, t3, t6, t7).

The anti-icing zone 301 is continuously supplied with power in all of the illustrated power-supply procedures. This continuous supply of electrical power is intended to persistently heat the corresponding ice protection area 311 so that ice never even forms thereon. The use of such an anti-icing approach along a leading edge is considered customary in airfoil ice protection.

As was indicated above, the envelope structures commonly include further layers (e.g., layers 141-143, layers 151-153, etc.) surrounding the heater layers 131-133, at least some of which are for electrical insulation and/or protection purposes. As such, envelope constructions can often hinder the transfer of ice-melting heat to edge regions of the deicing zones. This hindering is especially apparent when two adjacent deicer envelopes share a common interzone border (e.g., envelopes 111-112 sharing border 160, adjacent envelopes 112-113 sharing border 170, adjacent envelopes 211-212 sharing border 260, and adjacent envelopes 212-213 sharing border 270).

When designing a deicer envelope, the non-heating layers are generally optimized to provide adequate electrical insulation, sufficient environmental protection, maximum heat transfer, lighter weights, lower power draws, and longer lives. As such, trimming parameters along edge regions could compromise electrical insulation and environmental protection. Likewise, protracting parameters within non-edge regions could cause weight and power-draw concessions.

The ice protection system 40 addresses border-heat-hindrance issues by configuring envelope edge regions to enhance deicing at such interzone boundaries.

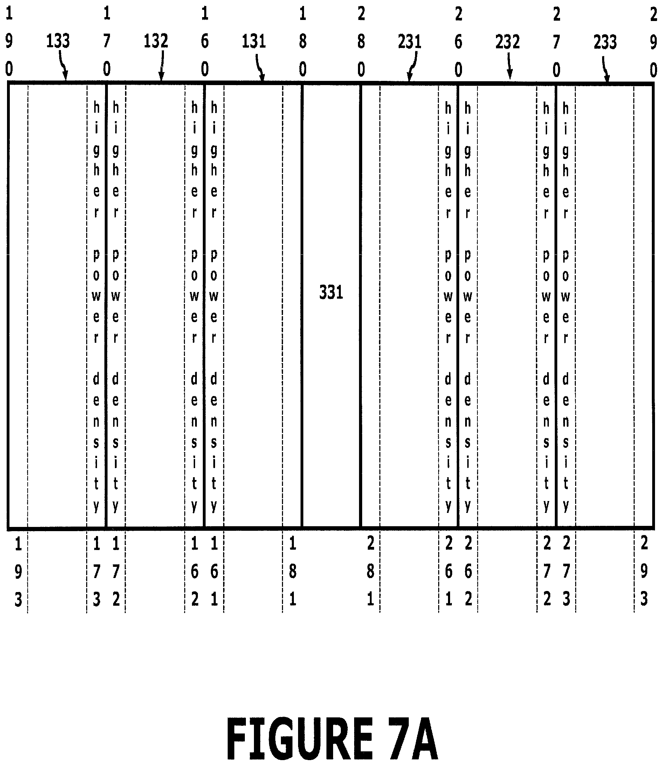

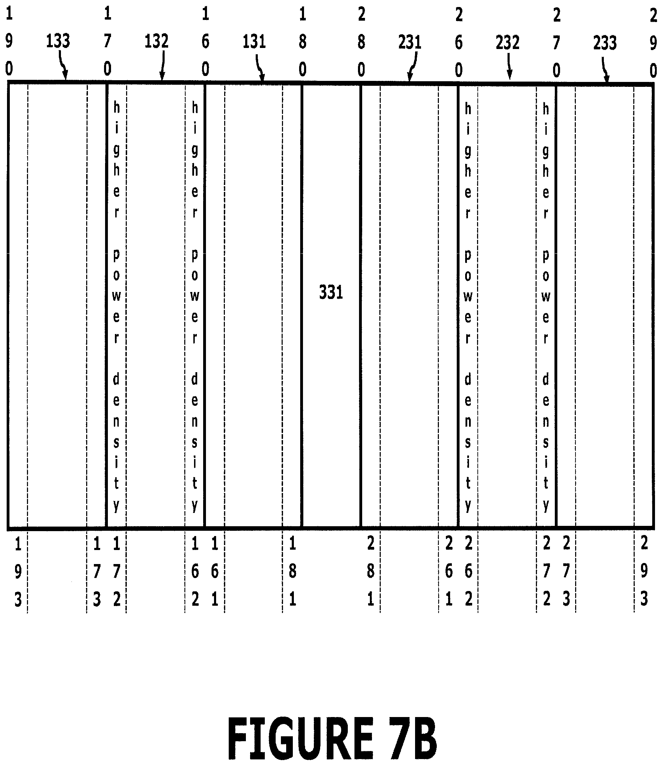

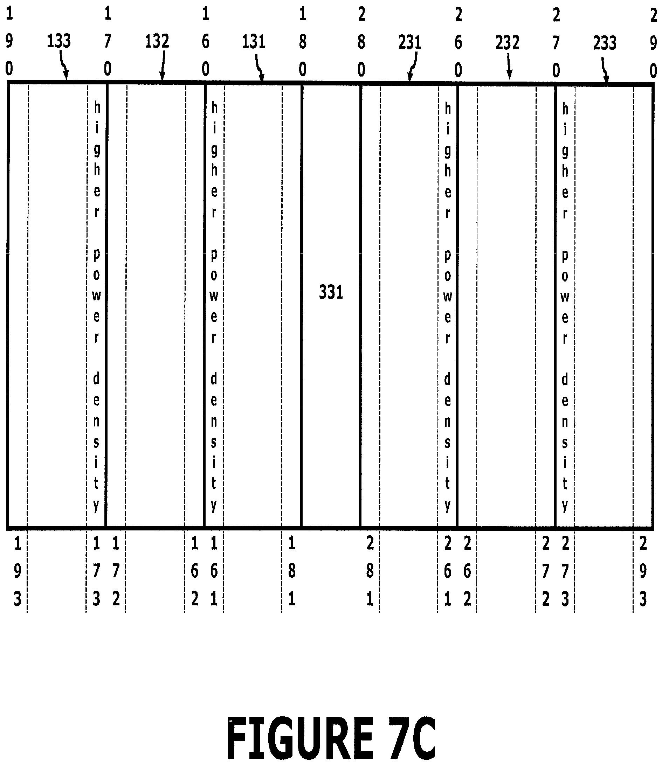

As shown in Figures 7A-7C, the deicing envelopes are configured so that interzone-border edge regions have a higher power. In Figure 7A, an increased power density is provided to each edge region flanking an interzone border (i.e., edge regions 161-162, edge regions 172-173, edge regions 261-262, edge regions 272-273). In Figure 7B, an increased power density is provided to only the edge regions of an intermediary zone (i.e., edge regions 162 and 172 of mid deicing zone 102, edge regions 262 and 272 of the mid deicing zone 202). In Figure 7C, an increased power density is provided at only at edge regions of non-intermediate zones (i.e., edge region 161 of fore deicing zone 101, edge region 173 of aft deicing zone 103, edge region 261 of fore deicing zone 201, and edge region 273 of aft deicing zone 203).

As shown in the 8th through 14th drawing sets, the heating layers 131-133 of the deicing zones 101-103 can comprise heating elements 135-137 and the heating layers 231-233 of the deicing zones 201-203 can comprise heating elements 235-237. These heating elements can comprise conductive tracks printed, etched, laid, or otherwise posed in a heating pattern within the heating layers. Increased power density in the relevant edge regions is achieved by tighter spacing, of the tracks.

As shown in the 15th through 17th drawing sets, the heating elements 135-137 and 235-237 can instead each comprise a single track printed, etched, laid, or otherwise posed in a solid heating pattern. The heating layers 131-133 and 231-233 can include bus bars (not shown) for supply and return of electric power to and from the solid heating pattern. In an arrangement outside the scope at the present invention, increased power density in the relevant edge regions can be achieved by higher resistance and/or higher heights of the single solid tracks.

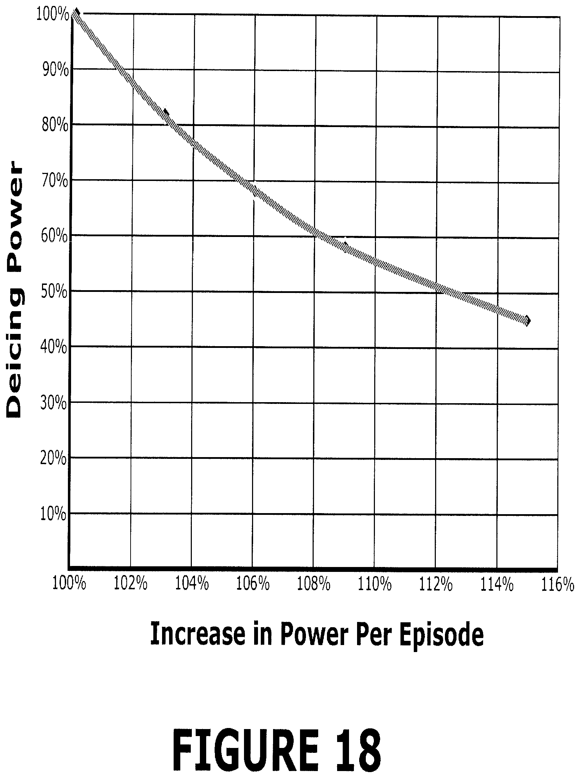

An increased power density in envelope edge regions can translate into more power being used by a particular deicing zone during each episode. However, analytical results indicate that a slight increase in per-episode power can result in a dramatic decrease in total deicing time, and thus a remarkable reduction in overall power. As shown in Figure 18, for example, an about 3% increase in per-episode power can correlate to an about 20% decrease in overall deicing power, an about 6% increase in per-episode power can correlate to an about 30% decrease in overall deicing power, an about 9% increase in per-episode power can correlate to an about 40% decrease in overall power, and an about 15% increase in per-episode power can correlate to an about 45% reduction in overall power.

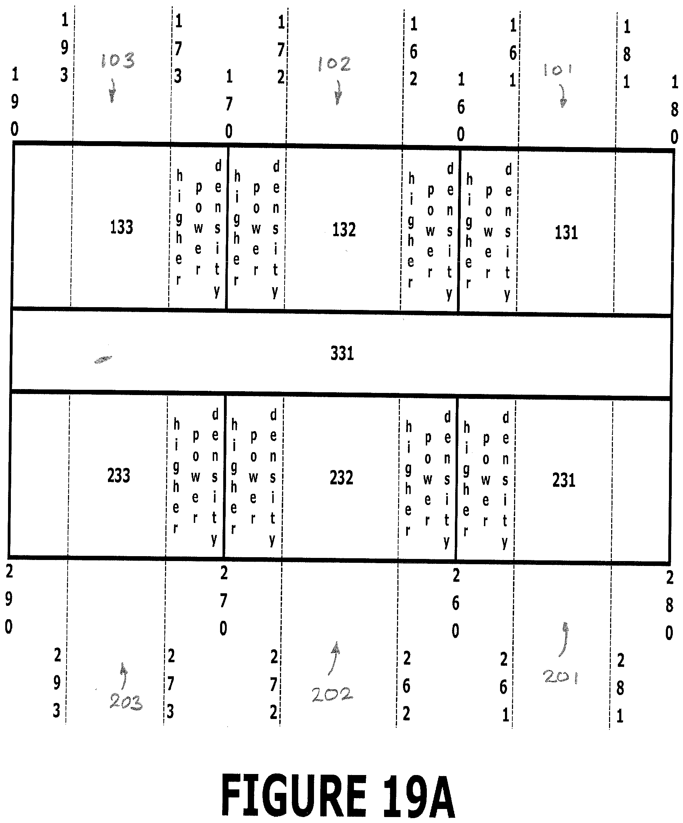

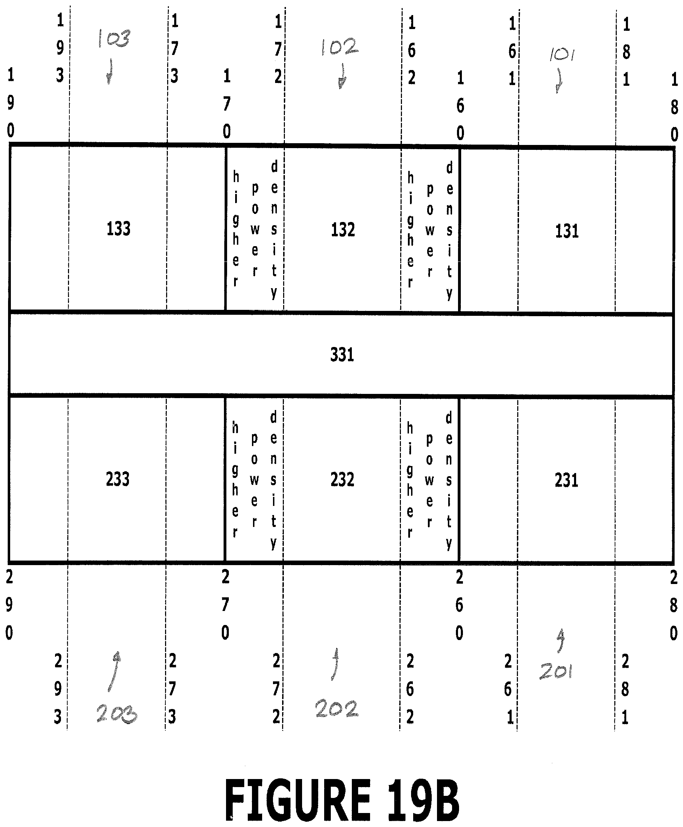

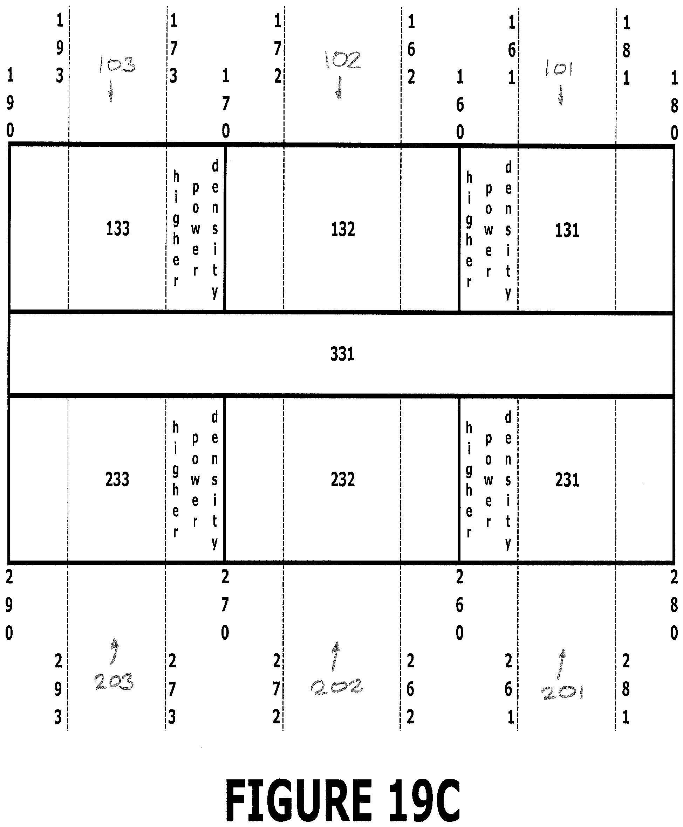

As shown in Figures 19A-19C, the interzone borders 160 and 170 can instead or additionally extend in a chordwise direction generally parallel to the airstream direction A. In this case, the first set 100 can comprise an inboard deicing zone 101, a mid deicing zone 102, and an outboard deicing zone 103. The second set 200 can comprise similar inboard, mid, and outboard zones 201-203. Inboard borders 180 and 280, and outboard boards 190 and 290, can likewise extend in a chordwise direction, with the anti-icing zone 301 being position between fore edges of the deicing zones 101-103 and fore edges of the deicing zones 201-203.

Although the aircraft 10, the aircraft surface 20, the system 40, the array 50, the controller 60, the deicing zones 101-103, the deicing zone 201-203, and/or the anti-icing zone 301 have been shown and described with respect to a certain embodiments, it is obvious that equivalent alterations and modifications will occur to others skilled in the art upon the reading and understanding of this specification and the annexed drawings. Specifically, for example, ice protection systems with more or less deicing and/or anti-icing zones are feasible and foreseeable. And while a particular feature of the aircraft 10 or the system 40 may have been described above with respect to some of the illustrated embodiments, such feature may be combined with one or more other features of the other embodiments, as may be desired and advantageous.

**REFERENCE NUMBERS**

| | | | |
|---|---|---|---|
| 10 | aircraft/outboard | 11 | fuselage |
| 20 | ice susceptible surface | 12 | wings |
| 30 | leading edge | 13 | horizontal stabilizers |
| 40 | ice protection system | 14 | vertical stabilizers |
| 50 | ice protection array | 15 | engines |
| 60 | controller | 16 | pylons |
| 100 | first set of deicing zones | 200 | second set of deicing zones |
| 101 | fore/inboard deicing zone | 201 | fore/inboard deicing zone |
| 102 | mid deicing zone | 202 | mid deicing zone |
| 103 | aft/outboard zone | 203 | aft/outboard deicing zone |
| 111 | fore/inboard envelope | 211 | fore/inboard deicer envelope |
| 112 | mid envelope | 212 | mid envelope |
| 113 | aft/outboard envelope | 213 | aft/outboard envelope |
| 121 | fore/inboard area | 221 | fore/inboard area |
| 122 | mid area | 222 | mid area |
| 123 | aft/outboard area | 223 | aft/outboard area |
| 131 | fore/inboard heating layer | 231 | fore/inboard heating layer |
| 132 | mid heating layer | 232 | mid heating layer |
| 133 | aft/outboard heating layer | 233 | aft/outboard heating layer |
| 135 | fore/inboard heating element | 235 | fore/inboard heating element |
| 136 | mid heating element | 236 | mid heating element |
| 137 | aft/outboard heating element | 237 | aft/outboard heating element |
| 141 | fore/inboard envelope layer | 241 | fore/inboard envelope layer |
| 142 | mid envelope layer | 242 | mid envelope layer |
| 143 | aft/outboard envelope layer | 243 | aft/outboard envelope layer |
| 151 | fore/inboard envelope layer | 251 | fore/inboard envelope layer |
| 152 | mid envelope layer | 252 | mid envelope layer |
| 153 | aft/outboard envelope layer | 253 | aft/outboard envelope layer |
| 160 | interzone border | 260 | interzone border |
| 161 | interzone-border edge region | 261 | interzone-border edge region |
| 162 | interzone-border edge region | 262 | interzone-border edge region |
| 170 | interzone border | 270 | interzone border |
| 172 | interzone-border edge region | 272 | interzone-border edge region |
| 173 | interzone-border edge region | 273 | interzone-border edge region |
| 180 | fore/inboard border | 280 | fore/inboard border |
| 181 | border edge region | 281 | border edge region |
| 190 | aft/outboard border | 290 | aft/outboard border |
| 193 | border edge region | 291 | border edge region |
| 301 | anti-icing zone | 331 | anti-icing heating layer |
| 311 | anti-icing envelope | 341 | anti-icing envelope layer |
| 321 | anti-icing area | 351 | anti-icing envelope layer |

## Claims

1. An ice protection system (40) comprising a first set (100) of contiguous deicing zones (101-103); wherein:
each deicing zone (101-103) comprises an envelope (111-113) defining an ice-protection area (121-123);
at least two of the envelopes (111-112/112-113) are adjacent and share a common interzone border (160/170);
each of the adjacent envelopes (111-112/112-113) includes an edge region (161-162/172-173) flanking the interzone border (160/170); and
the edge region (161-162/172-173) of at least one of the adjacent envelopes (111-112/112-113) is configured to enhance ice deicing at the interzone border (160/170) by providing a higher heating power density than the rest of the envelope (111-113);
**characterised in that**:
the higher heating power density is formed by having conductive tracks that are more tightly spaced in the edge region (161-162/172-173) than in the rest of the envelope (111-113).

2. An ice protection system (40) as set forth in claim 1, wherein each envelope (111-113) includes an electrothermal heater layer (131-133) which converts electric power to heat to deice the corresponding ice-protection area (121-123).

3. An ice protection system (40) as set forth in any of the preceding claims, wherein each interzone border (160/170) extends in a spanwise direction generally perpendicular to the airstream direction A.

4. An ice protection system (40) as set forth in claim 3, wherein the adjacent envelopes comprise a fore envelope (111) and wherein the edge region (161) of the fore envelope (111) flanking the interzone border (160) is configured to enhance deicing at the interzone border (160) by providing a higher heating power density than the rest of the envelope.

5. An ice protection system (40) as set forth in any of claims 3 or 4, wherein the adjacent envelopes comprise an aft envelope (113) and wherein the edge region (173) of the aft envelope (113) flanking the interzone border (170) is configured to enhance deicing at the interzone border (170) by providing a higher heating power density than the rest of the envelope.

6. An ice protection system (40) as set forth in any of claims 3 to 5, wherein the adjacent envelopes comprise a mid envelope (112) and wherein the fore edge region (162) of the mid envelope (112) flanking the interzone border (160) is configured to enhance deicing at the interzone border (160) by providing a higher heating power density than the rest of the envelope.

7. An ice protection system (40) as set forth in any of claims 3 to 6, wherein the adjacent envelopes comprise a mid envelope (112) and wherein the aft edge region (172) of the mid envelope (112) flanking the interzone border (170) is configured to enhance deicing at the interzone border (170) by providing a higher heating power density than the rest of the envelope.

8. An ice protection system (40) as set forth in any of the preceding claims, comprising a second set (200) of contiguous deicing zones (201-203); wherein:
each deicing zone (201-203) comprises an envelope (211-213) defining an ice-protection area (221-223);
each envelope (211-213) includes an electrothermal heater layer (231-233) which converts electric power to heat to deice the corresponding ice-protection area (221-223);
at least two of the envelopes (211-212/212-213) are adjacent and share a common interzone border (260/270);
each of the adjacent envelopes (211-212/212-213) includes an edge region (261-262/272-273) flanking the interzone border (260/270);
the edge region of at least one of the adjacent envelopes is configured to enhance ice deicing at the interzone border (260/270) by providing a higher heating power density than the rest of the envelope; and
each interzone border (260/270) extends in a spanwise direction generally perpendicular to the airstream direction (A).

9. An ice protection system (40) as set forth in claim 8, wherein the adjacent envelopes comprise a fore envelope (211) and wherein the edge region (261) of the fore envelope (211) flanking the interzone border (260) is configured to enhance deicing at the interzone border (260) by providing a higher heating power density than the rest of the envelope.

10. An ice protection system (40) as set forth in claim 8 or 9, wherein the adjacent envelopes comprise an aft envelope (213) and wherein the edge region (273) of the aft envelope (213) flanking the interzone border (270) is configured to enhance deicing at the interzone border (270) by providing a higher heating power density than the rest of the envelope.

11. An ice protection system (40) as set forth in any of claims 8 to 10, wherein the adjacent envelopes comprise a mid envelope (212) and wherein the fore edge region (262) of the mid envelope (212) flanking the interzone border (260) is configured to enhance deicing at the interzone border (260) by providing a higher heating power density than the rest of the envelope.

12. An ice protection system (40) as set forth in any of claims 8 to 11, wherein the adjacent envelopes comprise a mid envelope (212) and wherein the aft edge region (272) of the mid envelope (212) flanking the interzone border (270) is configured to enhance deicing at the interzone border (270) by providing a higher heating power density than the rest of the envelope.

13. An ice protection system (40) as set forth in any of the preceding claims, comprising an anti-icing zone (301) positioned fore of the first set (100) of the deicing zones (101-103).

14. An ice protection system (40) as set forth in any of claims 8 to 13, comprising an anti-icing zone (301) positioned fore of the second set (200) of the deicing zones (201-203).

15. An ice protection system (40) as set forth in claim 14, wherein the anti-icing zone (301) is positioned between the first set (100) of deicing zones (101-103) and the second set (200) of deicing zones (201-203).

## Patentansprüche

1. Eisschutzsystem (40), umfassend eine erste Gruppe (100) von zusammenhängenden Enteisungszonen (101-103); wobei:
jede Enteisungszone (101-103) eine Ummantelung (111-113) umfasst, die einen Eisschutzbereich (121-123) definiert;
mindestens zwei der Ummantelungen (111-112/112-113) benachbart sind und sich eine gemeinsame Zwischenzonengrenze (160/170) teilen;
jede der benachbarten Ummantelungen (111-112/112-113) eine Randregion (161-162/172-173) einschließt, die die Zwischenzonengrenze (160/170) flankiert; und
die Randregion (161-162/172-173) von mindestens einer der benachbarten Ummantelungen (111-112/112-113) dazu konfiguriert ist, die Eisenteisung an der Zwischenzonengrenze (160/170) durch Bereitstellen einer höheren Heizleistungsdichte als im Rest der Ummantelung (111-113) zu steigern;
**dadurch gekennzeichnet, dass**:
die höhere Heizleistungsdichte durch Leitungsbahnen gebildet wird, die in der Randregion (161-162/172-173) enger nebeneinanderliegen als im Rest der Ummantelung (111-113).

2. Eisschutzsystem (40) nach Anspruch 1, wobei jede Ummantelung (111-113) eine elektrothermische Heizschicht (131-133) einschließt, die elektrische Leistung in Wärme umwandelt, um den entsprechenden Eisschutzbereich (121-123) zu enteisen.

3. Eisschutzsystem (40) nach einem der vorhergehenden Ansprüche, wobei sich jede Zwischenzonengrenze (160/170) in einer Spannweitenrichtung erstreckt, die im Wesentlichen senkrecht zur Luftstromrichtung A verläuft.

4. Eisschutzsystem (40) nach Anspruch 3, wobei die benachbarten Ummantelungen eine vordere Ummantelung (111) umfassen und wobei die die Zwischenzonengrenze (160) flankierende Randregion (161) der vorderen Ummantelung (111) dazu konfiguriert ist, die Enteisung an der Zwischenzonengrenze (160) durch Bereitstellen einer höheren Heizleistungsdichte als im Rest der Ummantelung zu steigern.

5. Eisschutzsystem (40) nach einem der Ansprüche 3 oder 4, wobei die benachbarten Ummantelungen eine hintere Ummantelung (113) umfassen und wobei die die Zwischenzonengrenze (170) flankierende Randregion (173) der hinteren Ummantelung (113) dazu konfiguriert ist, die Enteisung an der Zwischenzonengrenze (170) durch Bereitstellen einer höheren Heizleistungsdichte als im Rest der Ummantelung zu steigern.

6. Eisschutzsystem (40) nach einem der Ansprüche 3 bis 5, wobei die benachbarten Ummantelungen eine mittlere Ummantelung (112) umfassen und wobei die die Zwischenzonengrenze (160) flankierende vordere Randregion (162) der mittleren Ummantelung (112) dazu konfiguriert ist, die Enteisung an der Zwischenzonengrenze (160) durch Bereitstellen einer höheren Heizleistungsdichte als im Rest der Ummantelung zu steigern.

7. Eisschutzsystem (40) nach einem der Ansprüche 3 bis 6, wobei die benachbarten Ummantelungen eine mittlere Ummantelung (112) umfassen und wobei die die Zwischenzonengrenze (170) flankierende hintere Randregion (172) der mittleren Ummantelung (112) dazu konfiguriert ist, die Enteisung an der Zwischenzonengrenze (170) durch Bereitstellen einer höheren Heizleistungsdichte als im Rest der Ummantelung zu steigern.

8. Eisschutzsystem (40) nach einem der vorhergehenden Ansprüche, umfassend eine zweite Gruppe (200) von zusammenhängenden Enteisungszonen (201-203); wobei:
jede Enteisungszone (201-203) eine Ummantelung (211-213) umfasst, die einen Eisschutzbereich (221-223) definiert;
jede Ummantelung (211-213) eine elektrothermische Heizschicht (231-233) einschließt, die elektrische Leistung in Wärme umwandelt, um den entsprechenden Eisschutzbereich (221-223) zu enteisen;
mindestens zwei der Ummantelungen (211-212/212-213) benachbart sind und sich eine gemeinsame Zwischenzonengrenze (260/270) teilen;
jede der benachbarten Ummantelungen (211-212/212-213) eine Randregion (261-262/272-273) einschließt, die die Zwischenzonengrenze (260/270) flankiert;
die Randregion von mindestens einer der benachbarten Ummantelungen dazu konfiguriert ist, die Eisenteisung an der Zwischenzonengrenze (260/270) durch Bereitstellen einer höheren Heizleistungsdichte als im Rest der Ummantelung zu steigern; und
jede Zwischenzonengrenze (260/270) sich in einer Spannweitenrichtung erstreckt, die im Wesentlichen senkrecht zur Luftstromrichtung (A) verläuft.

9. Eisschutzsystem (40) nach Anspruch 8, wobei die benachbarten Ummantelungen eine vordere Ummantelung (211) umfassen und wobei die die Zwischenzonengrenze (260) flankierende Randregion (261) der vorderen Ummantelung (211) dazu konfiguriert ist, die Enteisung an der Zwischenzonengrenze (260) durch Bereitstellen einer höheren Heizleistungsdichte als im Rest der Ummantelung zu steigern.

10. Eisschutzsystem (40) nach Anspruch 8 oder 9, wobei die benachbarten Ummantelungen eine hintere Ummantelung (213) umfassen und wobei die die Zwischenzonengrenze (270) flankierende Randregion (273) der hinteren Ummantelung (213) dazu konfiguriert ist, die Enteisung an der Zwischenzonengrenze (270) durch Bereitstellen einer höheren Heizleistungsdichte als im Rest der Ummantelung zu steigern.

11. Eisschutzsystem (40) nach einem der Ansprüche 8 bis 10, wobei die benachbarten Ummantelungen eine mittlere Ummantelung (212) umfassen und wobei die die Zwischenzonengrenze (260) flankierende vordere Randregion (262) der mittleren Ummantelung (212) dazu konfiguriert ist, die Enteisung an der Zwischenzonengrenze (260) durch Bereitstellen einer höheren Heizleistungsdichte als im Rest der Ummantelung zu steigern.

12. Eisschutzsystem (40) nach einem der Ansprüche 8 bis 11, wobei die benachbarten Ummantelungen eine mittlere Ummantelung (212) umfassen und wobei die die Zwischenzonengrenze (270) flankierende hintere Randregion (272) der mittleren Ummantelung (212) dazu konfigurierst ist, die Enteisung an der Zwischenzonengrenze (270) durch Bereitstellen einer höheren Heizleistungsdichte als im Rest der Ummantelung zu steigern.

13. Eisschutzsystem (40) nach einem der vorhergehenden Ansprüche, umfassend eine Eisbildung verhütende Zone (301), die vor der ersten Gruppe (100) der Enteisungszonen (101-103) positioniert ist.

14. Eisschutzsystem (40) nach einem der Ansprüche 8 bis 13, umfassend eine Eisbildung verhütende Zone (301), die vor der zweiten Gruppe (200) von Enteisungszonen (201-203) positioniert ist.

15. Eisschutzsystem (40) nach Anspruch 14, wobei die Eisbildung verhütende Zone (301) zwischen der ersten Gruppe (100) von Enteisungszonen (101-103) und der zweiten Gruppe (200) von Enteisungszonen (201-203) positioniert ist.

## Revendications

1. Système de protection contre le givre (40) comprenant un premier ensemble (100) de zones de dégivrage contiguës (101-103) ; dans lequel :
chaque zone de dégivrage (101-103) comprend une enveloppe (111-113) définissant une zone de protection contre le givre (121-123) ;
au moins deux des enveloppes (111-112 / 112-113) sont adjacentes et partagent un bord interzone commun (160 / 170) ;
chacune des enveloppes adjacentes (111-112 / 112-113) comprend une région de bord (161-162 / 172-173) jouxtant le bord interzone (160 / 170) ; et
la région de bord (161-162 / 172-173) d'au moins une des enveloppes adjacentes (111-112 / 112-113) est configurée pour accroître le dégivrage au niveau du bord interzone (160 / 170) en fournissant une densité de puissance calorifique plus élevée que le reste de l'enveloppe (111-113) ;
**caractérisé en ce que** :
la densité de puissance calorifique plus élevée est formée en ayant des pistes conductrices qui sont plus étroitement espacées dans la région de bord (161-162 / 172-173) que dans le reste de l'enveloppe (111-113).

2. Système de protection contre le givre (40) selon la revendication 1, dans lequel chaque enveloppe (111-113) comprend une couche chauffante électrothermique (131-133) qui convertit l'énergie électrique en chaleur pour dégivrer la zone de protection contre le givre correspondante (121-123).

3. Système de protection contre le givre (40) selon l'une quelconque des revendications précédentes, dans lequel chaque bord interzone (160 / 170) se prolonge dans une direction de l'envergure généralement perpendiculaire à la direction du flux d'air A.

4. Système de protection contre le givre (40) selon la revendication 3, dans lequel les enveloppes adjacentes comprennent une enveloppe avant (111) et dans lequel la région de bord (161) de l'enveloppe avant (111) jouxtant le bord interzone (160) est conçue pour accroître le dégivrage au niveau du bord interzone (160) en fournissant une densité de puissance calorifique plus élevée que le reste de l'enveloppe.

5. Système de protection contre le givre (40) selon l'une quelconque des revendications 3 ou 4, dans lequel les enveloppes adjacentes comprennent une enveloppe arrière (113) et dans lequel la région de bord (173) de l'enveloppe arrière (113) jouxtant le bord interzone (170) est conçue pour accroître le dégivrage au niveau du bord interzone (170) en fournissant une densité de puissance calorifique plus élevée que le reste de l'enveloppe.

6. Système de protection contre le givre (40) selon l'une quelconque des revendications 3 à 5, dans lequel les enveloppes adjacentes comprennent une enveloppe intermédiaire (112) et dans lequel la région de bord avant (162) de l'enveloppe intermédiaire (112) jouxtant le bord interzone (160) est conçue pour accroître le dégivrage au niveau du bord interzone (160) en fournissant une densité de puissance calorifique plus élevée que le reste de l'enveloppe.

7. Système de protection contre le givre (40) selon l'une quelconque des revendications 3 à 6, dans lequel les enveloppes adjacentes comprennent une enveloppe intermédiaire (112) et dans lequel la région de bord arrière (172) de l'enveloppe intermédiaire (112) jouxtant le bord interzone (170) est conçue pour accroître le dégivrage au niveau du bord interzone (170) en fournissant une densité de puissance calorifique plus élevée que le reste de l'enveloppe.

8. Système de protection contre le givre (40) selon l'une quelconque des revendications précédentes, comprenant un second ensemble (200) de zones de dégivrage contiguës (201-203) ; dans lequel :
chaque zone de dégivrage (201-203) comprend une enveloppe (211-213) définissant une zone de protection contre le givre (221-223) ;
chaque enveloppe (211-213) comprend une couche chauffante électrothermique (231-233) qui convertit l'énergie électrique en chaleur pour dégivrer la zone de protection contre le givre correspondante (221-223) ;
au moins deux des enveloppes (211-212 / 212-213) sont adjacentes et partagent un bord interzone commun (260/270) ;
chacune des enveloppes adjacentes (211-212 / 212-213) comprend une région de bord (261-262 / 272-273) jouxtant le bord interzone (260/270) ;
la région de bord d'au moins une des enveloppes adjacentes est configurée pour accroître le dégivrage au niveau du bord interzone (260/270) en fournissant une densité de puissance calorifique plus élevée que le reste de l'enveloppe ; et
chaque bord interzone (260/270) se prolonge dans une direction de l'envergure généralement perpendiculaire à la direction du flux d'air (A).

9. Système de protection contre le givre (40) selon la revendication 8, dans lequel les enveloppes adjacentes comprennent une enveloppe avant (211) et dans lequel la région de bord (261) de l'enveloppe avant (211) jouxtant le bord interzone (260) est configurée pour accroître le dégivrage au niveau du bord interzone (260) en fournissant une densité de puissance calorifique plus élevée que le reste de l'enveloppe.

10. Système de protection contre le givre (40) selon la revendication 8 ou 9, dans lequel les enveloppes adjacentes comprennent une enveloppe arrière (213) et dans lequel la région de bord (273) de l'enveloppe arrière (213) jouxtant le bord interzone (270) est configurée pour accroître le dégivrage au niveau du bord interzone (270) en fournissant une densité de puissance calorifique plus élevée que le reste de l'enveloppe.

11. Système de protection contre le givre (40) selon l'une quelconque des revendications 8 à 10, dans lequel les enveloppes adjacentes comprennent une enveloppe intermédiaire (212) et dans lequel la région de bord avant (262) de l'enveloppe intermédiaire (212) jouxtant le bord interzone (260) est configurée pour accroître le dégivrage au niveau du bord interzone (260) en fournissant une densité de puissance calorifique plus élevée que le reste de l'enveloppe.

12. Système de protection contre le givre (40) selon l'une quelconque des revendications 8 à 11, dans lequel les enveloppes adjacentes comprennent une enveloppe intermédiaire (212) et dans lequel la région de bord arrière (272) de l'enveloppe intermédiaire (212) jouxtant le bord interzone (270) est configurée pour accroître le dégivrage au niveau du bord interzone (270) en fournissant une densité de puissance calorifique plus élevée que le reste de l'enveloppe.

13. Système de protection contre le givre (40) selon l'une quelconque des revendications précédentes, comprenant une zone anti-givrage (301) positionnée en avant du premier ensemble (100) des zones de dégivrage (101-103).

14. Système de protection contre le givre (40) selon l'une quelconque des revendications 8 à 13, comprenant une zone anti-givrage (301) positionnée en avant du second ensemble (200) des zones de dégivrage (201-203).

15. Système de protection contre le givre (40) selon la revendication 14, dans lequel la zone anti-givrage (301) est positionnée entre le premier ensemble (100) de zones de dégivrage (101-103) et le second ensemble (200) de zones de dégivrage (201-203).
